# EUROPÄISCHE PATENTSCHRIFT

(11) **EP 2 307 251 B1**
(45) Veröffentlichungstag und Bekanntmachung des Hinweises auf die Patenterteilung: **29.05.2013**
(21) Anmeldenummer: 09779809.4
(22) Anmeldetag: 17.06.2009
(51) Int. Cl.: B60W 30/18, B60W 20/00, B60W 10/02, B60W 10/10

(54) **VERFAHREN UND VORRICHTUNG ZUM ANFAHREN EINES HYBRIDFAHRZEUGES**
METHOD AND DEVICE FOR STARTING A HYBRID VEHICLE
PROCÉDÉ ET DISPOSITIF POUR DÉMARRER UN VÉHICULE HYBRIDE

(30) Priorität: 24.07.2008 DE 102008040692
(43) Veröffentlichungstag der Anmeldung: 13.04.2011
(73) Patentinhaber: Robert Bosch GmbH, 70442 Stuttgart (DE)
(72) Erfinder: RICHTER, Boyke, 76228 Karlsruhe (DE)
(86) Internationale Anmeldenummer: PCT/EP2009/057518
(87) Internationale Veröffentlichungsnummer: WO 2010/009943

(56) Entgegenhaltungen:
- DE-A1-102007 050 659
- BERGER R ET AL: "ESG - Elektrisches Schaltgetriebe" ATZ AUTOMOBILTECHNISCHE ZEITSCHRIFT, VIEWEG PUBLISHING, WIESBADEN, DE, Bd. 107, Nr. 6, 1. Juni 2005 (2005-06-01), Seiten 488-493,495, XP001519133 ISSN: 0001-2785

## Beschreibung

### Stand der Technik

Die Erfindung betrifft ein Verfahren zum Anfahren eines Hybridfahrzeuges, welches ein erstes und ein zweites Antriebaggregat aufweist, wobei das erste Antriebsaggregat auf einem ersten Teilgetriebe eines zwei Teilgetriebe aufweisenden Doppelkupplungsgetriebes angeordnet ist sowie eine Vorrichtung zur Durchführung des Verfahrens.

Fahrzeuge mit einer hybriden Antriebsstruktur weisen einen Verbrennungsmotor und ein zweites Antriebsaggregat auf, welches beispielsweise ein Elektromotor sein kann. So kann das Antriebsmoment während des Fahrbetriebes des Hybridfahrzeuges von beiden Antriebsaggregaten aufgebracht werden.

Aus der US 2007/0028718 A1 ist ein Doppelkupplungsgetriebe für ein Hybridfahrzeug bekannt, wobei das Doppelkupplungsgetriebe zwei Getriebeeingangswellen besitzt, auf denen jeweils ein Teil der Getriebegänge angeordnet sind. Ist ein Gang eingelegt, kann auf der inaktiven Welle bereits der folgende Gang geschaltet werden. Durch Umkuppeln der beiden Wellen mit Hilfe zweier Kupplungen kann damit der Gang schnell gewechselt werden. Bei einem Torque Split Hybridfahrzeug ist der Elektromotor an eine der beiden Getriebeeingangswellen des Doppelkupplungsgetriebes angebunden.

Aus dem Artikel "ESG - Elektrisches Schaltgetriebe" der Automobiltechnischen Zeitschrift welches den Nächstliegenden stand den Technik Biloet, (Vieweg Publishing, Wiesbaden, DE, Bd. 107, Nr. 6, 1 Juni 2005) ist ein Verfahren zum Starten eines Verbrennungsmotors eines Hybridfahrzeuges mit Doppelkupplungsgetriebe bekannt, bei dem bei einem stehenden Fahrzeug, welches mittels Bremsen gebremst wird, der Verbrennungsmotor gestartet wird.

Aus der DE 10 2007 050 659 sind zwei Verfahren zum Starten eines Verbrennungsmotors eines Hybridfahrzeuges mit Doppelkupplungsgetriebe aus der elektrischen Fahrt heraus bekannt.

Beim Anfahren mit dem Elektromotor reicht das Antriebsmoment, insbesondere bei voll beladenem Fahrzeug am Berg oder an einem Bordstein, nicht aus, obwohl ein Gang in diesem Teilgetriebe eingelegt ist und der Antriebsstrang verspannt ist. Da auf einen niederen Gang zurückgeschaltet werden muss, kann das anliegende Antriebsmoment nicht aufrechterhalten werden, was zu einem unakzeptablen Zurückrollen des Fahrzeuges führt.

### Offenbarung der Erfindung

### Vorteile der Erfindung

Das erfindungsgemäße Verfahren zum Anfahren eines Hybridfahrzeuges mit den Merkmalen des Anspruchs 1 weist gegenüber den bekannten Lösungsansätzen den Vorteil auf, dass das Antriebsdrehmoment des ersten Antriebsaggregates als Startdrehmoment für das zweite Antriebsaggregat genutzt wird, wodurch dieses von Antriebsdrehmoment des ersten Antriebaggregates geschleppt wird, was zum Start des zweiten Antriebaggregates führt. Die nun vorliegenden Antriebsmomente des ersten und des zweiten Antriebsaggregates werden zusammen den Rädern zugeführt. Das gemeinsame Antriebsmoment reicht nun aus, um das Fahrzeug vorwärts zu bewegen, ohne ein Zurückrollen des Fahrzeuges zu verursachen, da auf ein Öffnen des Antriebsstranges verzichtet wird. Erfindungsgemäß ist hierzu vorgesehen, dass eine zweite Kupplung dem ersten Teilgetriebe auf seiner radabgewandten Seite vorgeschaltet ist und eine erste Kupplung dem zweiten Teilgetriebe auf seiner radabgewandten Seite zugeordnet ist. Der Antriebsstrang ist zunächst verspannt, indem an der zweiten Getriebeeingangswelle ein Gang eingelegt ist und dadurch ein Antriebsmoment an den Rädern anliegt, wobei zum Start des zweiten Antriebsaggregates die zweite Kupplung geschlossen wird und die erste Kupplung schlupfend betrieben wird, und das erste Teilgetriebe in den neutralen Zustand versetzt wird und somit das Antriebsmoment über die erste Getriebeeingangswelle an die Räder (4) umgeleitet wird.

Durch den erfindungsgemäßen Schaltablauf in dem Doppelkupplungsgetriebe wird bei einem konstanten Moment am Rad der Start des zweiten Antriebsaggregats ermöglicht, indem das von dem ersten Antriebsaggregat bereitgestellte Antriebsmoment auf das zweite Teilgetriebe umgeleitet wird. Ein Zurückrollen des Fahrzeuges bei einem gewünschten Vortrieb, z.B. bei betätigtem Fahrpedal, wird verhindert, ohne die Funktionalität des Fahrens mit dem ersten Antriebsaggregat einzuschränken.

In einer Ausgestaltung der Erfindung wird das zweite Teilgetriebe in einen Gang geschaltet, dessen Übersetzungsverhältnis größer ist als das Übersetzungsverhältnis, welches der Gang des ersten Teilgetriebes aufweist. Der Gang mit dem großen Übersetzungsverhältnis erlaubt gemeinsam mit den vom ersten und zweiten Antriebsaggregat bereit gestellten Antriebsmomenten eine Fahrfunktion, wie sie vom Fahrzeugnutzer gewünscht wird, ohne Verzögerung und ohne ein unerwartetes Zurückrollen.

Vorteilhafterweise ist dem zweiten Teilgetriebe eine Kupplung vorgeschaltet, welche schlupfend eingestellt wird, wobei ein erster Teil des von dem ersten Antriebsaggregat gelieferten maximalen Antriebsmoments an die Räder weitergeleitet wird, während ein zweiter Teil des maximalen Antriebsmomentes zum Start des zweiten Antriebsaggregates verwendet wird. Mit diesem konstruktiv einfachen Mittel wird ein zuverlässiges Anfahren des Hybridfahrzeuges möglich.

Nach dem Start des zweiten Antriebsaggregates werden über die Kupplung das Antriebsmoment des ersten und des zweiten Antriebsaggregates über das zweite Teilgetriebe an die Räder weitergeleitet. Da nun ein ausreichendes Antriebmoment vorhanden ist, wird ein komfortables Fahren des Hybridfahrzeuges in jeder Situation gewährleistet, auch bei Extremsituationen wie das Anfahren an einem Berg oder einem Bordstein.

In einer anderen Weiterbildung der Erfindung weist eine Vorrichtung zum Anfahren eines Hybridfahrzeuges ein erstes und ein zweites Antriebaggregat auf, wobei das erste Antriebsaggregat auf einem ersten Teilgetriebe eines zwei Teilgetriebe aufweisenden Doppelkupplungsgetriebes angeordnet ist. Um bei einem Anfahrversuch mit dem ersten Antriebsaggregat ein Zurückrollen beim Anfahren des Hybridfahrzeuges zu verhindern, sind Mittel vorhanden, welche beim Anfahren des Hybridfahrzeuges mit dem ersten Antriebsaggregat das zweite Antriebsaggregat starten, ohne dass die an einem das Doppelkupplungsgetriebe enthaltenden Antriebsstrang anliegende Spannung unterbrochen wird.

Durch den Start des zweiten Antriebsaggregates wird sowohl von diesem als auch vom ersten Antriebsaggregat ein Antriebsmoment bereitgestellt, so dass ausreichend Energie zum Anfahren des Fahrzeuges zur Verfügung steht.

In einer Weiterbildung der Erfindung weisen die Mittel eine erste Kupplung auf, welche einem ersten Teilgetriebe auf seiner radabgewandten Seite vorgeschaltet ist und eine zweite Kupplung auf, welche einem zweiten Teilgetriebe auf seiner radabgewandten Seite zugeordnet ist. Durch eine Schaltung der an sich im Antriebsstrang vorhandenen Kupplungen ist es komfortable und einfach möglich, das Antriebsmoment des ersten Antriebsaggregates auf das zweite Teilgetriebe umzulenken, ohne den Antriebsstrang zu öffnen, was bedeutet, dass immer ein konstantes Antriebsmoment an den Rädern anliegt.

Um das Antriebsmoment des ersten Antriebsaggregates sowohl über das erste Teilgetriebe als auch über das zweite Teilgetriebe an die Räder leiten zu können, greift das erste Antriebsaggregat zwischen der ersten Kupplung und dem ersten Teilgetriebe in den Antriebsstrang ein.

Das zweite Antriebaggregat greift zwischen der ersten und der zweiten Kupplung in den Antriebsstrang ein. Dadurch kann dass zweite Antriebsaggregat bei geschlossener erster Kupplung durch das Antriebsmoment des ersten Antriebaggregates, welches seine maximale Antriebsleistung bereitstellt, aktiviert werden.

Vorteilhafterweise ist das erste Antriebsaggregat ein Elektromotor und das zweite Antriebsaggregat ein Verbrennungsmotor. Durch diese Anordnung wird es möglich, die Funktionalität des elektrischen Fahrens beizubehalten. Das elektrische Fahren ermöglicht sowohl eine nutzerfreundliche Fahrfunktion als auch eine Kraftstoffersparnis.

### Kurze Beschreibung der Zeichnungen

Die Erfindung lässt zahlreiche Ausführungsmöglichkeiten zu. Eine davon soll anhand der in der Zeichnung dargestellten Figuren näher erläutert werden.

Es zeigt:
- Figur 1:: Prinzipdarstellung eines Torque-Split-Hybridfahrzeuges mit einem Doppelkupplungsgetriebe nach dem Stand der Technik
- Figur 2a:: erfindungsgemäßes Ausführungsbeispiel - Ausgangszustand
- Figur 2b:: erfindungsgemäßes Ausführungsbeispiel - Schließen der Kupplung und Einlegen eines Ganges
- Figur 2c:: erfindungsgemäßes Ausführungsbeispiel - Schließen der Kupplung mit Schlupfmoment
- Figur 2d:: erfindungsgemäßes Ausführungsbeispiel - Starten des Verbrennungsmotors
- Figur 2e:: erfindungsgemäßes Ausführungsbeispiel - Anfahren mit Elektromotor und Verbrennungsmotor

### Ausführungsformen der Erfindung

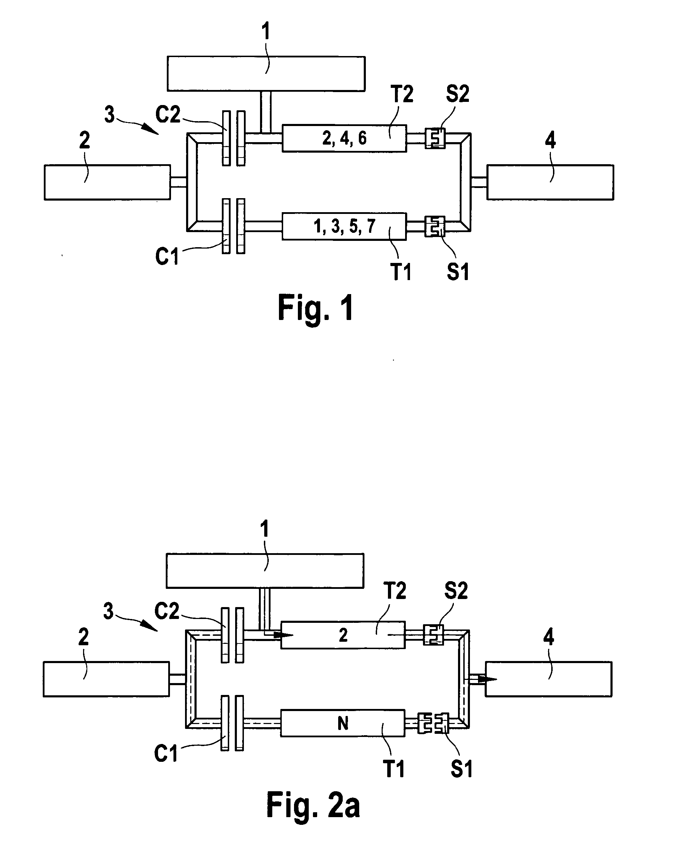

Figur 1 zeigt ein bekanntes Torque-Split-Hybridfahrzeug mit einem Doppelkupplungsgetriebe. Ein Elektromotor 1 und ein Verbrennungsmotor 2 führen an einen Antriebsstrang 3, der den Elektromotor 1 und den Verbrennungsmotor 2 mit den Rädern 4 verbindet.

Der Antriebsstrang 3 weist zwei Zweige auf, wobei der erste Zweig eine erste Kupplung C1 und die erste Getriebeeingangswelle T1 des Doppelkupplungsgetriebes umfasst. Weiterhin schließt sich nach der ersten Getriebeeingangswelle T1 eine Klauenkupplung S1 an, die mit den Rädern 4 verbunden ist.

Der zweite Zweig des Antriebsstranges 3 enthält eine zweite Kupplung C2, welche auf die zweite Getriebeeingangswelle T2 des Doppelkupplungsgetriebes führt. Die zweite Getriebeeingangswelle T2 ist mit einer zweiten Klauenkupplung S2 verbunden, die ebenfalls an die Räder 4 führt.

Auf der ersten Getriebeeingangswelle T1 befinden sich die ungeraden Gänge, wie z.B. 1, 3, 5, 7, während auf der zweiten Getriebeeingangswelle T2 die geraden Gänge 2, 4, 6 angeordnet sind. Ist ein Gang eingelegt, kann auf der inaktiven Welle bereits der folgende Gang geschaltet werden. Durch Umkuppeln der beiden Getriebeeingangswellen T1, T2 mit Hilfe der Kupplungen C1 und C2 wird der Gang schnell gewechselt.

Der Verbrennungsmotor 2 ist zwischen der ersten und der zweiten Kupplung C1, C2 angeordnet. Der Elektromotor 1 ist an eine der beiden Getriebeeingangswellen T1, T2 angebunden. Im vorliegenden Fall erfolgt die Anbindung an die zweite Getriebeeingangswelle T2, welche die geraden Gänge trägt. Durch diese Anordnung kann in bestimmten Betriebszuständen der Verbrennungsmotor 2 in einem anderen Gang, z.B. einem ungeraden Gang, betrieben werden als der Elektromotor 1, der in einem geraden Gang eingelegt ist. Dadurch wird der Elektromotor 1 in einem wirkungsgradgünstigen Bereich betrieben, der sich vom wirkungsgradoptimierten Bereich des Verbrennungsmotors 2 unterscheidet.

Mit der zweiten Getriebeeingangswelle T2, an welche der Elektromotor 1 angebunden ist, kann rein elektrisch gefahren werden. Bei stehendem Fahrzeug kann der Verbrennungsmotor 2 nur bei der Neutralstellung, d.h. ohne eingelegten Gang der zweiten Getriebeeingangswelle T2 und geschlossener zweiter Kupplung C2 gestartet werden.

Soll elektrisch gefahren werden, ist an der zweiten Getriebeeingangswelle T2 ein Gang eingelegt und der Antriebsstrang 3 ist verspannt. Das Antriebsmoment des Elektromotors 1 wird bei geschlossener zweiter Klauenkupplung S2 an die Räder 4 geleitet. In diesem Zustand kann ein elektrischer Anfahrversuch scheitern, was beispielsweise an einer Steigung mit einem voll beladenen Fahrzeug auftreten kann.

Der Verbrennungsmotor 2 kann nicht gestartet werden, da keine ausreichend hohe Drehzahl zum Start des Verbrennungsmotors 2 vorhanden ist. Um einen niedrigeren Gang einzulegen, muss der 2. Gang ausgelegt werden. Dazu darf die zweite Klauenkupplung S2 kein Antriebsmoment übertragen und muss also geöffnet sein. Dies bedeutet, dass der Antriebsstrang 3 geöffnet werden muss und das vom Elektromotor 1 erzeugte Antriebsmoment nicht auf die Räder 4 übertragen werden kann, was zum Zurückrollen des Hybridfahrzeuges führt.

Mit Hilfe der Figuren 2a bis 2e soll nun ein erfindungsgemäßes Ausführungsbeispiel für einen Schaltablauf in einem Doppelkupplungsgetriebe eines Torque-Split-Hybridfahrzeug erläutert werden.

Figur 2a zeigt den Ausgangszustand. Das Hybridfahrzeug fährt rein elektrisch. Dazu sind die Kupplungen C1 und C2 geöffnet. Das Antriebsmoment, welches der Elektromotor 1 erzeugt, wird über die zweite Getriebeeingangswelle T2, auf welcher der zweite Gang geschaltet ist, über die geschlossene Klauenkupplung S2 an die Räder 4 weitergeleitet. In diesem Moment ist der Antriebsstrang 3 verspannt und ein konstantes Antriebsmoment liegt an den Rädern 4 an. Trotzdem bewegt sich das Fahrzeug nicht, da dass vom Elektromotor 1 ausgegebene Antriebsmoment für einen Anfahrvorgang nicht ausreicht. Diese Situation kann bei einem Anfahrversuch des voll beladenen Hybridfahrzeuges an einem Berg oder an einem Bordstein auftreten.

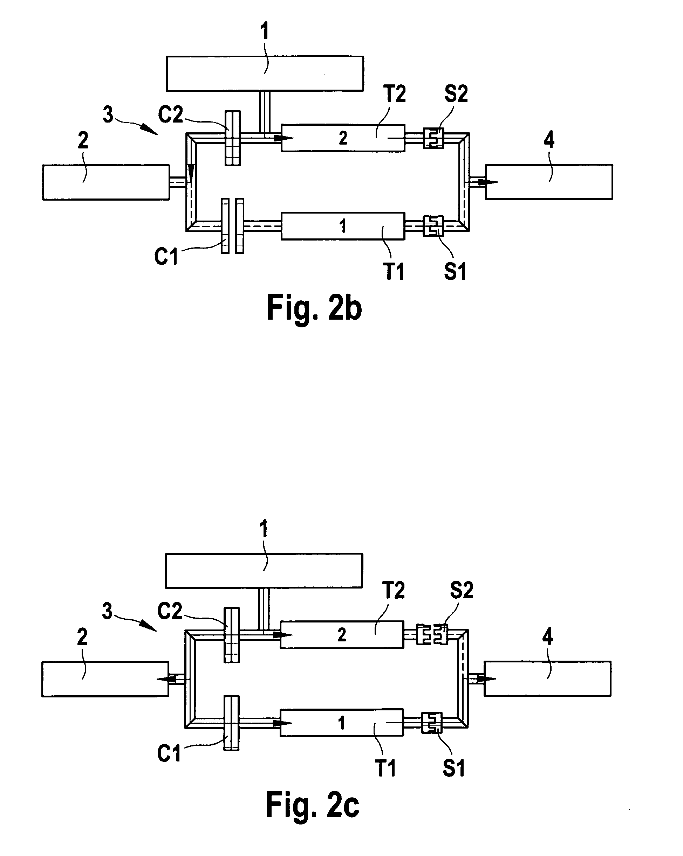

Um das Hybridfahrzeug trotzdem ohne ein Zurückrollen weiter zu bewegen, wird die zweite Kupplung C2 geschlossen. Das von dem Elektromotor 1 gelieferte Antriebsmoment verteilt sich, wie in Figur 2b dargestellt ist, einmal über die zweite Getriebeeingangswelle T2 und die zweite Klauenkupplung S2 auf die Räder 4 sowie über die geschlossene zweite Kupplung C2 in Richtung Verbrennungsmotor 2. Da die erste Getriebeeingangswelle T1 noch inaktiv ist, wird der erste Gang eingelegt und die erste Klauenkupplung S1 geschlossen.

Wie in Figur 2c gezeigt, wird anschließend die erste Kupplung C1 soweit geschlossen, dass sie das Antriebsmoment, welches von dem Elektromotor 1 übertragen wird, schlupfend stellt. Sobald das Antriebsmoment des Elektromotors 1 vollständig über die erste Kupplung C1 geleitet wird, ist die Klauenkupplung S2 momentenfrei und kann geöffnet werden. Somit wird der zweite Gang eingelegt und das zweite Teilgetriebe T2 in einen neutralen Zustand versetzt. Die zweite Getriebeeingangswelle T2 ist somit inaktiv und überträgt kein Antriebsmoment mehr direkt auf die Räder 4. Das Antriebsmoment wird nun auf die erste Getriebeeingangswelle T1 umgeleitet.

Sobald dies geschehen ist, wird von dem Elektromotor 1 das maximale Antriebsmoment gefordert. Die erste Kupplung C1 schlupft und überträgt nur einen Teil des von dem Elektromotor 1 bereitgestellten maximalen Antriebsmomentes. Dabei wird dieser Teil des Antriebsmomentes so bemessen, dass das resultierende Vortriebsmoment an den Rädern 4 denselben Wert erreicht, den es zu Beginn des Vorganges, wie er in Figur 2a dargestellt ist, bereits hatte. Dadurch wird sichergestellt, dass die Fahrzeugreaktion, die der Fahrer erfährt, während des gesamten Vorganges konstant bleibt.

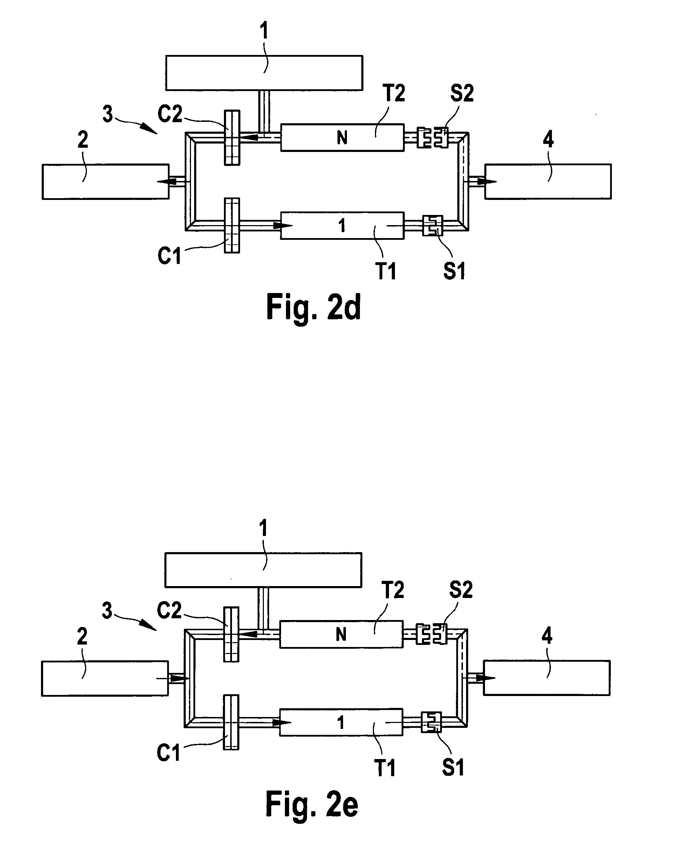

Der verbleibende Teil des von dem Elektromotor 1 erzeugten maximalen Antriebsmomentes wirkt auf den Verbrennungsmotor 2 ein und schleppt diesen hoch, wodurch ein Start des Verbrennungsmotors 2 ermöglicht wird (Figur 2d).

Figur 2e zeigt, dass wenn der Verbrennungsmotor 2 läuft, die erste Kupplung C1 geschlossen wird. Ab diesem Moment werden die von dem Verbrennungsmotor 2 und dem Elektromotor 1 bereitgestellten Antriebsmomente zusammen über die erste Getriebeeingangswelle T1, welche in den ersten Gang geschaltet ist, auf die Räder 4 übertragen, da die entsprechende Klauenkupplung S1 geschlossen ist. Das Hybridfahrzeug fährt nun auch an der Bordsteinkante oder am Berg zuverlässig an, ohne zurückzurollen.

Die Erfindung ist auch anwendbar, wenn im Gegensatz zu dem beschriebenen Beispiel der Elektromotor 1 an der ersten Getriebeeingangswelle T1 angreift, welches die ungeraden Gänge trägt.

## Patentansprüche

1. Verfahren zum Anfahren eines Hybridfahrzeuges , welches ein erstes (1) und ein zweites Antriebaggregat (2) aufweist, wobei das erste Antriebsaggregat (1) auf einem ersten Teilgetriebe (T2) eines zwei Teilgetriebe (T1, S1; T2; S2) aufweisenden Doppelkupplungsgetriebes angeordnet ist
wobei eine zweite Kupplung (C2) dem ersten Teilgetriebe (T2, S2) auf seiner radabgewandten Seite vorgeschaltet ist und eine erste Kupplung (C1) dem zweiten Teilgetriebe (T1, S1) auf seiner radabgewandten Seite zugeordnet ist,
**dadurch gekennzeichnet, dass** beim Anfahren des Hybridfahrzeuges mit dem ersten Antriebsaggregat (1) das zweite Antriebsaggregat (2) gestartet wird, ohne dass die an einem das Doppelkupplungsgetriebe enthaltenden Antriebsstrang (3) anliegende Spannung unterbrochen wird,
wobei der Antriebsstrang (3) zunächst verspannt ist, indem an der zweiten Getriebeeingangswelle (T2) ein Gang eingelegt ist und dadurch ein Antriebsmoment an den Rädern (4) anliegt,
wobei zum Start des zweiten Antriebsaggregates (2) die zweite Kupplung (C2) geschlossen wird und die erste Kupplung (C1) schlupfend betrieben wird,
und das erste Teilgetriebe (T2) in den neutralen Zustand versetzt wird und somit das Antriebsmoment über die erste Getriebeeingangswelle (T1) an die Räder (4) umgeleitet wird.

2. Verfahren nach Anspruch 1 **dadurch gekennzeichnet, dass** das von dem ersten Antriebsaggregat (1) bereitgestellte Antriebsmoment auf das zweite Teilgetriebe (T1, S1) umgeleitet wird.

3. Verfahren nach Anspruch 2 **dadurch gekennzeichnet, dass** das zweite Teilgetriebe (T1, S1) in einen Gang geschaltet wird, dessen Übersetzungsverhältnis größer ist als das Übersetzungsverhältnis, welches der Gang des erstes Teilgetriebes (T2, S2) aufweist.

4. Verfahren nach Anspruch 3 **dadurch gekennzeichnet, dass** dem zweiten Teilgetriebe (T1; S1) die erste Kupplung (C1) vorgeschaltet ist, welche schlupfend eingestellt wird, wobei ein erster Teil des von dem ersten Antriebsaggregat (1) gelieferten maximalen Antriebsmoments an die Räder (4) weitergeleitet wird, während ein zweiter Teil des maximalen Antriebsmomentes zum Start des zweiten Antriebsaggregates (2) verwendet wird.

5. Verfahren nach Anspruch 4 **dadurch gekennzeichnet, dass** nach dem Start des zweiten Antriebsaggregates (2) über die Kupplung (C1) das Antriebsmoment des ersten (1) und des zweiten Antriebsaggregates (2) über das zweite Teilgetriebe (T1; S1) an die Räder (4) weitergeleitet werden.

6. Vorrichtung zum Anfahren eines Hybridfahrzeuges, welches ein erstes (1) und ein zweites Antriebaggregat (2) aufweist, wobei das erste Antriebsaggregat (1) auf einem ersten Teilgetriebe (T2, S2) eines zwei Teilgetriebe (T1, S1; T2, S2) aufweisenden Doppelkupplungsgetriebes angeordnet ist,
wobei eine zweite Kupplung (C2) dem ersten Teilgetriebe (T2, S2) auf seiner radabgewandten Seite vorgeschaltet ist und eine erste Kupplung (C1) dem zweiten Teilgetriebe (T1, S1) auf seiner radabgewandten Seite zugeordnet ist,
**dadurch gekennzeichnet, dass** Mittel (C1, C2) vorhanden sind, welche beim Anfahren des Hybridfahrzeuges mit dem ersten Antriebsaggregat (1) das zweite Antriebsaggregat (2) starten, ohne dass die an einem das Doppelkupplungsgetriebe enthaltenden Antriebsstrang (3) anliegende Spannung unterbrochen wird,
wobei der Antriebsstrang (3) zunächst verspannt ist, indem an der zweiten Getriebeeingangswelle (T2) ein Gang eingelegt ist und dadurch ein Antriebsmoment an den Rädern (4) anliegt,
wobei zum Start des zweiten Antriebsaggregates (2) die zweite Kupplung (C2) geschlossen wird und die erste Kupplung (C1) schlupfend betrieben wird,
und das erste Teilgetriebe (T2) in den neutralen Zustand versetzt wird und somit das Antriebsmoment über die erste Getriebeeingangswelle (T1) an die Räder (4) umgeleitet wird.

7. Vorrichtung nach Anspruch 6 **dadurch gekennzeichnet, dass** das erste Antriebsaggregat (1) zwischen der zweiten Kupplung (C2) und dem ersten Teilgetriebe (T2, S2) in den Antriebsstrang (3) eingreift.

8. Vorrichtung nach Anspruch 6 **dadurch gekennzeichnet, dass** das zweite Antriebsaggregat (2) zwischen der zweiten (C2) und der ersten Kupplung (C1) in den Antriebsstrang (3) eingreift.

9. Vorrichtung nach einem der vorhergehenden Ansprüche 6 bis 8 **dadurch gekennzeichnet, dass** das erste Antriebsaggregat (1) ein Elektromotor und das zweite Antriebsaggregat (2) ein Verbrennungsmotor ist.

## Claims

1. Method for starting a hybrid vehicle which has a first (1) and a second drive assembly (2), the first drive assembly (1) being arranged on a first component transmission (T2) of a dual-clutch transmission which has two component transmissions (T1, S1; T2; S2), a second clutch (C2) being connected upstream of the first component transmission (T2, S2) on its side which faces away from the wheels, and a first clutch (C1) being assigned to the second component transmission (T1, S1) on its side which faces away from the wheels, **characterized in that,** during starting of the hybrid vehicle with the first drive assembly (1), the second drive assembly (2) is started, without the tension which prevails at a drive train (3) which comprises the dual-clutch transmission being interrupted, the drive train (3) first of all being tensioned by a gear being engaged on the second transmission input shaft (T2) and a drive moment prevailing at the wheels (4) as a result, the second clutch (C2) being closed and the first clutch (C1) being operated in a slipping manner in order to start the second drive assembly (2), and the first component transmission (T2) being set into the neutral state and the drive moment therefore being diverted to the wheels (4) via the first transmission input shaft (T1).

2. Method according to Claim 1, **characterized in that** the drive moment which is provided by the first drive assembly (1) is diverted to the second component transmission (T1, S1).

3. Method according to Claim 2, **characterized in that** the second component transmission (T1, S1) is switched into a gear, the transmission ratio of which is greater than the transmission ratio which the gear of the first component transmission (T2, S2) has.

4. Method according to Claim 3, **characterized in that** the first clutch (C1) which is set to slip is connected upstream of the second component transmission (T1; S1), a first part of the maximum drive moment which is supplied by the first drive assembly (1) being forwarded to the wheels (4), whereas a second part of the maximum drive moment is used to start the second drive assembly (2).

5. Method according to Claim 4, **characterized in that**, after the start of the second drive assembly (2) via the clutch (C1), the drive moment of the first (1) and the second drive assembly (2) is forwarded via the second component transmission (T1; S1) to the wheels (4).

6. Apparatus for starting a hybrid vehicle which has a first (1) and a second drive assembly (2), the first drive assembly (1) being arranged on a first component transmission (T2, S2) of a dual-clutch transmission which has two component transmissions (T1, S1; T2, S2), a second clutch (C2) being connected upstream of the first component transmission (T2, S2) on its side which faces away from the wheels, and a first clutch (C1) being assigned to the second component transmission (T1, S1) on its side which faces away from the wheels, **characterized in that** there are means (C1, C2) which, during starting of the hybrid vehicle with the first drive assembly (1), start the second drive assembly (2), without the tension which prevails at a drive train (3) which comprises the dual-clutch transmission being interrupted, the drive train (3) first of all being tensioned by a gear being engaged on the second transmission input shaft (T2) and a drive moment prevailing at the wheels (4) as a result, the second clutch (C2) being closed and the first clutch (C1) being operated in a slipping manner in order to start the second drive assembly (2), and the first component transmission (T2) being set into the neutral state and the drive moment therefore being diverted to the wheels (4) via the first transmission input shaft (T1).

7. Apparatus according to Claim 6, **characterized in that** the first drive assembly (1) engages into the drive train (3) between the second clutch (C2) and the first component transmission (T2, S2).

8. Apparatus according to Claim 6, **characterized in that** the second drive assembly (2) engages into the drive train (3) between the second (C2) and the first clutch (C1).

9. Apparatus according to one of the preceding Claims 6 to 8, **characterized in that** the first drive assembly (1) is an electric motor and the second drive assembly (2) is an internal combustion engine.

## Revendications

1. Procédé pour démarrer un véhicule hybride, présentant un premier (1) et un deuxième (2) groupe motopropulseur, le premier groupe motopropulseur (1) étant disposé sur une première transmission partielle (T2) d'une transmission à double embrayage présentant deux transmissions partielles (T1, S1 ; T2 ; S2),
un deuxième embrayage (C2) étant monté en amont de la première transmission partielle (T2, S2) sur son côté opposé à la roue et un premier embrayage (C1) étant associé à la deuxième transmission partielle (T1, S1) sur son côté opposé à la roue, **caractérisé en ce que** lors du démarrage du véhicule hybride avec le premier groupe motopropulseur (1) le deuxième groupe motopropulseur (2) est démarré, sans que la contrainte s'appliquant à une chaîne cinématique (3) contenant la transmission à double embrayage soit interrompue,
la chaîne cinématique (3) étant tout d'abord contrainte, par le fait qu'un rapport est enclenché au niveau du deuxième arbre d'entrée de la transmission (T2) et de ce fait un couple d'entraînement s'applique aux roues (4),
le deuxième embrayage (C2) étant fermé pour le démarrage du deuxième groupe motopropulseur (2) et le premier embrayage (C1) étant entraîné en patinage,
et la première transmission partielle (T2) étant amenée à l'état neutre et de ce fait le couple d'entraînement étant dirigé vers les roues (4) par le biais du premier arbre d'entrée de transmission (T1).

2. Procédé selon la revendication 1, **caractérisé en ce que** le couple d'entraînement fourni par le premier groupe motopropulseur (1) est dirigé vers la deuxième transmission partielle (T1, S1).

3. Procédé selon la revendication 2, **caractérisé en ce que** la deuxième transmission partielle (T1, S1) est commutée dans un rapport dont le rapport de transmission est supérieur au rapport de transmission que présente le rapport de la première transmission partielle (T2, S2).

4. Procédé selon la revendication 3, **caractérisé en ce que** le premier embrayage (C1) est monté en amont de la deuxième transmission partielle (T1 ; S1), le premier embrayage étant ajusté avec patinage, une première partie du couple d'entraînement maximal fourni par le premier groupe motopropulseur (1) étant conduite aux roues (4), tandis qu'une deuxième partie du couple d'entraînement maximal est utilisée pour le démarrage du deuxième groupe motopropulseur (2).

5. Procédé selon la revendication 4, **caractérisé en ce qu'**après le démarrage du deuxième groupe motopropulseur (2) par le biais de l'embrayage (C1), le couple d'entraînement du premier (1) et du deuxième (2) groupe motopropulseur est conduit par le biais de la deuxième transmission partielle (T1 ; S1) aux roues (4).

6. Dispositif pour démarrer un véhicule hybride, qui présente un premier (1) et un deuxième (2) groupe motopropulseur, le premier groupe motopropulseur (1) étant disposé sur une première transmission partielle (T2, S2) d'une transmission à double embrayage présentant deux transmissions partielles (T1, S1 ; T2, S2),
un deuxième embrayage (C2) étant monté en amont de la première transmission partielle (T2, S2) sur son côté opposé à la roue et un premier embrayage (C1) étant associé à la deuxième transmission partielle (T1, S1) sur son côté opposé à la roue, **caractérisé en ce que** des moyens (C1, C2) sont prévus, lesquels, lors du démarrage du véhicule hybride avec le premier groupe motopropulseur (1), démarrent le deuxième groupe motopropulseur (2) sans que la contrainte s'appliquant à une chaîne cinématique (3) contenant la transmission à double embrayage soit interrompue,
la chaîne cinématique (3) étant tout d'abord contrainte, par le fait qu'un rapport est enclenché au niveau du deuxième arbre d'entrée de la transmission (T2) et de ce fait un couple d'entraînement s'applique aux roues (4),
le deuxième embrayage (C2) étant fermé pour le démarrage du deuxième groupe motopropulseur (2) et le premier embrayage (C1) étant entraîné en patinage,
et la première transmission partielle (T2) étant amenée à l'état neutre et de ce fait le couple d'entraînement étant dirigé vers les roues (4) par le biais du premier arbre d'entrée de transmission (T1).

7. Dispositif selon la revendication 6, **caractérisé en ce que** le premier groupe motopropulseur (1) vient en prise entre le deuxième embrayage (C2) et la première transmission partielle (T2, S2) dans la chaîne cinématique (3).

8. Dispositif selon la revendication 6, **caractérisé en ce que** le deuxième groupe motopropulseur (2) vient en prise entre le deuxième (C2) et le premier embrayage (C1) dans la chaîne cinématique (3).

9. Dispositif selon l'une quelconque des revendications 6 à 8, **caractérisé en ce que** le premier groupe motopropulseur (1) est un moteur électrique et le deuxième groupe motopropulseur (2) est un moteur à combustion interne.
